# EUROPÄISCHE PATENTSCHRIFT

(11) **EP 2 668 381 B1**
(45) Veröffentlichungstag und Bekanntmachung des Hinweises auf die Patenterteilung: **12.07.2017**
(21) Anmeldenummer: 12700333.3
(22) Anmeldetag: 12.01.2012
(51) Int. Cl.: F01N 3/08, F01N 3/20, F01N 9/00

(54) **VERFAHREN ZUM BETRIEB EINER ABGASANLAGE**
METHOD FOR OPERATING AN EXHAUST GAS SYSTEM
PROCÉDÉ POUR FAIRE FONCTIONNER UN SYSTÈME D'ÉCHAPPEMENT

(30) Priorität: 28.01.2011 DE 102011009619
(43) Veröffentlichungstag der Anmeldung: 04.12.2013
(73) Patentinhaber: Continental Automotive GmbH, 30165 Hannover (DE)
(72) Erfinder: BRÜCK, Rolf, 51429 Bergisch Gladbach (DE); KONIECZNY, Jörg-Roman, 53804 Much (DE)
(86) Internationale Anmeldenummer: PCT/EP2012/050465
(87) Internationale Veröffentlichungsnummer: WO 2012/100992

(56) Entgegenhaltungen:
- EP-A1- 1 057 983
- DE-A1- 4 236 271
- DE-A1- 10 323 979
- US-A- 5 713 198
- US-A- 5 804 148

## Beschreibung

Die Erfindung betrifft ein Verfahren zum Betrieb einer Abgasanlage einer Verbrennungskraftmaschine, die den Schadstoffausstoß der Verbrennungskraftmaschine insbesondere nach dem Kaltstart reduzieren soll.

Die Abgasvorschriften für Verbrennungskraftmaschinen wurden in den letzten Jahren immer weiter verschärft. Dies gilt insbesondere auch für das Kaltstartverhalten von Verbrennungskraftmaschinen, also die Zeitspanne unmittelbar nach Neustarten der Verbrennungskraftmaschine eines Kraftfahrzeugs. Gerade in diesem Verbrennungsprozess werden vermehrt Kohlenwasserstoffe unverbrannt durch die Abgasleitung an die Umgebung abgeführt. Daher sind seit einigen Jahren in Abgasanlagen für entsprechende Verbrennungskraftmaschinen Abgasbehandlungsvorrichtungen eingebaut, die einen Adsorber und einen Katalysator umfassen. Der Adsorber dient der Adsorption von Kohlenwasserstoffen, wobei diese Adsorption nur bis zu einer bestimmten Temperatur (ca. 150 °C) möglich ist. Bei Erreichen dieser Temperatur setzt eine Desorption der Kohlenwasserstoffe aus dem Adsorber ein, so dass diese Kohlenwasserstoffe erneut dem Abgasstrom zugeführt werden. In dem stromabwärts des Adsorbers angeordneten Katalysator mit einer oxidativ wirkenden Substanz sollen dann die aus dem Brennraum der Verbrennungskraftmaschine unverbrannt ausgetretenen und/oder die vom Adsorber desorbierten Kohlenwasserstoffe umgesetzt werden. Der Katalysator weist eine sogenannte light-off Temperatur (Anspringtemperatur) auf. Erst ab Erreichen dieser Temperatur werden die Kohlenwasserstoffe durch den Katalysator katalytisch umgesetzt.

Bei der Ausgestaltung derartiger Abgasbehandlungsvorrichtungen ist es erforderlich, das Adsorptionsverhalten des Adsorbers und das Umsetzungsverhalten des stromabwärts angeordneten Katalysators aufeinander abzustimmen, so dass ein Großteil der Kohlenwasserstoffe im Adsorber gespeichert werden solange die light-off-Temperatur am Katalysator noch nicht erreicht ist. Weiter sollte die light-off-Temperatur am Katalysator möglichst frühzeitig erreicht werden, so dass die Speicherung von Kohlenwasserstoffen nur kurzfristig erfolgt und dann eine effektive Umsetzung im Katalysator erreicht werden kann. Bei der Auslegung der Abgasbehandlungsvorrichtungen Adsorber und Katalysator ist zu berücksichtigen, dass eine Vergrößerung des Volumens des Adsorbers dazu führt, dass die dem Abgas entnommene Wärmemenge entsprechend steigt, so dass der stromabwärts angeordnete Katalysator später die light-off Temperatur erreicht.

Bislang wurde nunmehr aus Sicherheitsgründen das System aus Adsorber und Katalysator für einen vorgegebenen Betriebszustand überdimensioniert ausgelegt, so dass z. B. Abweichungen hinsichtlich der tatsächlichen auftretenden Temperaturen und/oder der Qualität der Beschichtungen mit erfasst sind. Dies führt aber vielfach zur Vergrößerung der thermisehen Masse im Abgassystem und damit zur Verlängerung der so genannten Kaltstartphase, Platzproblemen, erhöhten Kosten für die Bereitstellung der Abgasbehandlungsvorrichtungen und vieles mehr.

Die US-A-5,713,198 offenbart eine Anordnung bestehend aus Adsorber, Heizeinrichtung und Katalysator. Die Heizeinrichtung wird in Abhängigkeit von dem Alterungszustand des Adsorbers betrieben. Dadurch soll die Umsetzung von aus dem Adsorber wieder freigesetzten Kohlenwasserstoffen sichergestellt werden. Der Alterungszustand des Adsorbers wird über den Temperaturanstieg im stromabwärts angeordneten, elektrisch beheizten Katalysator bestimmt. Ein gealterter Adsorber hat eine geringere Aufnahmekapazität für Kohlenwasserstoffe. Diese durchströmen daher den Adsorber in zunehmender Anzahl. Diese Kohlenwasserstoffe werden dann in dem Katalysator umgesetzt, so dass dessen Temperatur steigt.

Der vorliegenden Erfindung liegt daher die Aufgabe zugrunde, die mit Bezug auf den Stand der Technik geschilderten Probleme zumindest teilweise zu lösen. Insbesondere soll ein Verfahren zum Betrieb einer Abgasanlage angegeben werden, das sicherstellt, dass eine möglichst geringe Menge an unverbrannten Kohlenwasserstoffen durch die Abgasleitung in die Umgebung strömt. Zudem soll ein solches System für die gesamte Lebenszeit bzw. Betriebszeit in einem Kraftfahrzeug hinsichtlich der Schadstoffwerte besonders gut einstellbar und effizient betrieben werden können.

Diese Aufgaben werden durch ein Verfahren gemäß den Merkmalen des Patentanspruchs 1 gelöst. Vorteilhafte Ausgestaltungen des erfindungsgemäßen Verfahrens beziehungsweise deren Implementierung in ein Kraftfahrzeug sind in den abhängig formulierten Patentansprüchen angegeben. Es ist darauf hinzuweisen, dass die in den Patentansprüchen einzeln aufgeführten Merkmale in beliebiger, technologisch sinnvoller, Weise miteinander kombiniert werden können und weitere Ausgestaltungen der Erfindung aufzeigen. Die Beschreibung, insbesondere im Zusammenhang mit den Figuren, erläutert die Erfindung weiter und führt ergänzende Ausführungsbeispiele der Erfindung an.

Das erfindungsgemäße Verfahren ist zum Betrieb einer Abgasanlage einer Verbrennungskraftmaschine geeignet, bei der die Abgasanlage zumindest einen Adsorber zur Adsorption von Kohlenwasserstoffen und einen stromabwärts des Adsorbers angeordneten Katalysator zur Umsetzung von Kohlenwasserstoffen sowie wenigstens eine zwischen dem Adsorber und dem Katalysator angeordnete Heizeinrichtung aufweist. Die Heizeinrichtung wird in Abhängigkeit des Alterungszustandes des Katalysators angepasst betrieben. Insbesondere ist dieses Verfahren geeignet zum Betrieb einer Abgasanlage einer Otto-Verbrennungskraftmaschine. In Abgasanlagen von Ottomotoren werden insbesondere 3-Wege-Katalysatoren eingesetzt, die im Abgas enthaltene Kohlenwasserstoffe, Stickoxide und Kohlenmonoxide durch Oxidation umsetzen. Die light-off-Temperaturen liegen hier im Neuzustand des Katalysators bei ca. 220 bis 260 °C. Weiterhin ist das Verfahren auch geeignet zum Betrieb einer Abgasanlage einer Diesel-Verbrennungskraftmaschine. Hier werden so genannte Diesel-Oxidations-Katalysatoren (DOC) eingesetzt, die zur Umsetzung von Partikeln, Kohlenwasserstoffen und Kohlenmonoxiden geeignet sind. Die light-off Temperaturen liegen hier im Neuzustand des Katalysators bei ca. 130 °C. Die light-off-Temperaturen der 3-Wege-Katalysatoren und der DOC verschieben sich jedoch bei Alterung des Katalysators hin zu höheren Temperaturen.

Gemäß einer besonderen Ausgestaltung des Verfahrens wird die zumindest eine Heizvorrichtung an das Adsorptionsverhalten oder das Desorptionsverhalten des zumindest einen Adsorbers angepasst betrieben.

Ein Adsorber zur Adsorption von Kohlenwasserstoffen (HC) meint insbesondere eine Abgasbehandlungseinheit umfassend eine Trägerstruktur und wenigstens eine adsorbierende Beschichtung. Bevorzugt kommt ein Adsorber mit Zeolith als Molekularsieb (Beschichtung) zum Einsatz.

Zeolithe sind mikroporöse Alumosilikate (Aluminium-Silicium-Kristalle) mit der Eigenschaft, bestimmte Moleküle aufnehmen zu können. Die Zeolithstruktur besteht aus einem Tetraedergerüst mit Kanälen und/oder Hohlräumen, deren Geometrie einen Zeolithen charakterisiert. Während der Kaltstartphase des Fahrbetriebes werden die Kohlenwasserstoffe in der Porenstruktur des Adsorbers aufgenommen (Adsorptionsphase). Die Stärke der Anbindung der Kohlenwasserstoffe an den Adsorber hängt von der Art der Kohlenwasserstoffe und dem Aufbau des Speichermediums ab. Mit zunehmender Betriebsdauer und steigender Abgastemperatur werden die in dem Adsorber gespeicherten Kohlenwasserstoffe desorbiert (Desorptionsphase). Dies geschieht bei Temperaturen zwischen 100 bis 200 °C. Bevorzugt ist weiterhin, dass der Adsorber in einem Bereich von 0 bis 0,5 Meter von dem Brennraum der Verbrennungskraftmaschine entfernt angeordnet ist und dass dieser ein bevorzugtes Trägervolumen von 0,5 bis 1 Liter zur Verfügung stellt. Insbesondere bei einer motornahen Anordnung ist die Temperaturbeständigkeit einer Zeolith-Beschichtung zu berücksichtigen. Diese kann bei hohen Abgastemperaturen, insbesondere bei Temperaturen oberhalb 800 °C beschädigt werden. Insbesondere wird daher der Adsorber in einem, insbesondere zuschaltbaren Bypass der Abgasleitung angeordnet, so dass das Abgas nur bis zum Erreichen einer bestimmten Temperatur durch den Bypass strömt und oberhalb der bestimmten Temperatur den Adsorber nicht mehr beaufschlagt. Weiterhin kann der Adsorber insbesondere im Unterbodenbereich eines Kraftfahrzeuges angeordnet werden, da hier die Temperaturbelastung geringer ist als bei einer Anordnung im Motorraum. In diesem Fall kann insbesondere auf einen Bypass verzichtet werden.

Ein Katalysator zur Umsetzung von Kohlenwasserstoffen betrifft insbesondere einen so genannten Oxidationskatalysator oder auch Diesel-Oxidationskatalysator (DOC) oder einen 3-Wege-Katalysator, also Trägerkörper mit einer oxidativ wirkenden Beschichtung. Die oxidativ wirkende Beschichtung kann eine Trägersubstanz (wie zum Beispiel einen so genannten Washcoat umfassen, der mit Edelmetallen und/oder seltenen Erden dotiert ist. Hierbei kommen insbesondere Platin, Rhodium, Palladium und ähnliches zum Einsatz. Bevorzugt ist weiterhin, dass der Katalysator in einem Bereich von 0 bis 0,2 Meter von dem Adsorber entfernt angeordnet ist.

Die wenigstens eine Heizeinrichtung umfasst insbesondere ein elektrisches regelbares Heizelement. Die Heizeinrichtung ist dabei bevorzugt für das Abgas durchströmbar und geeignet, die Temperatur des Abgases beim Durchströmen zu erhöhen. Ganz besonders bevorzugt ist, dass die Heizeinrichtung einen Wabenkörper umfasst, insbesondere einen, der mit metallischen Blechen bzw. Folien aufgebaut ist.

Mit einer Anordnung der wenigstens einen Heizeinrichtung "zwischen" dem Adsorber und dem Katalysator ist auch gemeint, dass die Heizeinrichtung zumindest teilweise in dem Adsorber und/oder Katalysator integriert und/oder unmittelbar dazu benachbart angeordnet ist. Hierbei ist besonders bevorzugt, dass die Heizeinrichtung und der Katalysator eine Baueinheit bilden, bei der eine entsprechende katalytische Beschichtung zur Umwandlung von Kohlenwasserstoffen direkt auf der beheizbaren Heizeinrichtung aufgebracht ist, so dass durch die Aktivierung der Heizeinrichtung die katalytische Beschichtung unmittelbar auf entsprechend gewünschte Temperaturen erwärmt wird.

Zum Betrieb der wenigstens einen Heizeinrichtung ist diese regelmäßig mit einer entsprechenden Stromversorgung/Spannungsversorgung und einer Steuerung verbunden. Auf diese Weise ist es möglich, eine Aktivierung bzw. Deaktivierung der wenigstens einen Heizeinrichtung mittels der Steuerung zu vorgegebenen Zeitpunkten und/oder Parametern zu veranlassen. Wie diese Regelung bzw. dieser Betrieb erfolgt, ist Gegenstand der vorliegenden Erfindung, wobei insbesondere die nachfolgenden Aspekte wesentlich sind.

Demnach soll die Heizeinrichtung in Abhängigkeit des Alterungszustandes des Katalysators angepasst betrieben werden. Das heißt mit anderen Worten auch, dass die bereitgestellte Heizleistung auf den aktuellen Alterungszustand des Katalysators angeglichen, eingestellt und/oder eingerichtet ist. Dies bedeutet insbesondere, dass bei dem Betrieb der Heizeinrichtung das aktuelle Umsetzungsvermögen des Katalysators bestimmt bzw. ermittelt und berücksichtigt wird. Hierbei sind insbesondere Betriebsprozesse umfasst, die eine über die Lebensdauer der Abgasanlage (allein) in Abhängigkeit vom Alterungszustand des Katalysators veränderliche Betriebsweise zur Folge haben. Der Alterungszustand des Katalysators kann dabei insbesondere durch folgende Faktoren gekennzeichnet sein:
- Thermische Alterung:
   Hierbei kommt es aufgrund der thermischen Belastung des Katalysators über die Lebensdauer zu einer Verkleinerung der katalytisch aktiven Oberfläche, insbesondere durch Sintervorgänge bei Temperaturen oberhalb von 800°C und/oder Abschmelzen.
- Chemische Vergiftung:
   Chemische Reaktionen mit Fremdstoffen (Kraftstoff, Öladditive, etc.), können die katalytisch aktive Beschichtung ebenfalls zerstören.
- Mechanische Vergiftung:
   Während der Lebensdauer des Katalysators kann auch eine zunehmende Abdeckung der katalytisch aktiven Beschichtung einsetzen, z. B. durch Blei, Schwefel, Phosphor, Mangan etc., bzw. durch Kraftstoff und/oder Öl.

Der Alterungszustand des Katalysators kann insbesondere anhand der Laufleistung des Katalysators bzw. des Kraftfahrzeuges bestimmt werden. Weiterhin kann der Alterungszustand anhand der Zeitspanne seit der Fertigung des Katalysators und/oder seit dem Einsatz in einer Abgasanlage ermittelt werden. Weitere Parameter, die bei der Bestimmung des Alterungszustands ein Rolle spielen können sind: Art der katalytischen Beladung, Beschichtungsart, Beschichtungsdicke, Anzahl der Regenerationszyklen im Betrieb, maximal erreichte Temperaturen, gemittelte Temperatur (oder Temperaturhistogramm), durchgeströmte Abgasmenge, Abgasart, Kraftstoffart, ggf. Kombination von unterschiedlichen Kraftstofftypen (Zusätze von Bioethanol etc.), Ölverbrauch, etc. Auch eine (unterschiedlich gewichtete) Kombination dieser Parameter zur Bestimmung und/oder Gewichtung des Alterungszustands ist möglich. Erfindungsgemäß wird die Heizeinrichtung zumindest in Abhängigkeit einer vorgegebenen Grenztemperatur des Katalysators betrieben, wobei die vorgegebene Grenztemperatur in Abhängigkeit von einem aktuellen Alter des Katalysators variiert.

Bei einem neuwertigen Katalysator liegt die light-off-Temperatur tiefer als bei einem bereits gealterten Katalysator. Das kann dazu führen, dass die light-off-Temperatur eines neuwertigen Katalysators in einem so tiefen Temperaturbereich liegt, dass dieser bereits einsatzbereit ist, wenn die Desorption der unverbrannten Kohlenwasserstoffe aus dem stromaufwärts angeordneten Adsorber noch nicht begonnen hat. So ist hier beispielsweise für diese Konstellation ein Zuheizen der Abgasanlage nicht zwingend erforderlich. Infolge der zunehmenden Alterung des Katalysators wird jedoch die light-off-Temperatur und/oder die Umsetzungseffektivität des Katalysators zu höheren Temperaturwerten verschoben, so dass im Laufe der vielen Betriebsstunden des Systems und damit über die Lebensdauer des Systems die Desorption von unverbrannten Kohlenwasserstoffen aus dem Adsorber bereits einsetzt, bevor der stromabwärts angeordnete Katalysator die light-off-Temperatur allein erreicht. Dann soll entsprechend dieser aktuellen Situation eine Zufuhr an Heizleistung erfolgen.

Aus diesem Grund wird hier der angepasste Betrieb der Heizeinrichtung an eine vorgegebene Grenztemperatur des Katalysators vorgeschlagen. Diese Grenztemperatur ist dabei nicht über die Lebensdauer bzw. Betriebsdauer der Abgasanlage konstant sondern variabel. Sie orientiert sich am aktuellen Alter bzw. Alterungszustand des Katalysators. Für den (bevorzugten) Fall, dass die Grenztemperatur (etwa) die light-off-Temperatur des Katalysators repräsentiert, steigt die vorgegebene Grenztemperatur des Katalysators folglich in diesem Zeitraum regelmäßig insgesamt an. Dies kann kontinuierlich und/oder stufenweise erfolgen. Gegebenenfalls kann nach einer Reinigung bzw. Entgiftung des Katalysators die Grenztemperatur wieder gesenkt werden.

Diesbezüglich ist es auch vorteilhaft, wenn die altersabhängige Grenztemperatur, bei der der Katalysator die light-off-Temperatur erreicht, zu jedem Zeitpunkt des Betriebs der Verbrennungskraftmaschine bekannt ist. Diese Grenztemperatur variiert entsprechend in Abhängigkeit des aktuellen Alters bzw. Alterungszustandes des Katalysators. Die Heizeinrichtung wird folglich mit zunehmendem Alter des Katalysators entsprechend frühzeitiger bzw. länger zugeschaltet, um den Katalysator möglichst (genau) dann auf eine Temperatur oberhalb oder gleich der Grenztemperatur zu bringen. Dabei ist insbesondere zu berücksichtigen, dass durch die elektrische Heizeinrichtung nicht die gesamte stromabwärts angeordnete Oberfläche des Katalysators auf die Grenztemperatur erwärmt werden muss, sondern es ist insbesondere ausreichend, nur einen kleinen Teilbereich so aufzuheizen, dass lokal die Grenztemperatur erreicht wird. Durch die dann lokal einsetzende katalytische Umsetzung der unverbrannten Kohlenwasserstoffe wird ausreichend Energie aus der exothermen Reaktion der Verbrennung der Kohlenwasserstoffe frei, so dass eine sehr schnelle Erwärmung des gesamten Katalysators erfolgt und entsprechend eine große Menge an desorbierten Kohlenwasserstoffen umsetzbar wird.

Gemäß einer bevorzugten Weiterbildung weist das Verfahren zumindest die folgenden Schritte auf:
- Bestimmen einer Umsetzungstemperatur des Katalysators,
- Vergleich der Umsetzungstemperatur mit einer vorgegebenen Grenztemperatur,
- Betreiben der Heizeinrichtung, wenn die Umsetzungstemperatur die vorgegebene Grenztemperatur unterschreitet.

Die Umsetzungstemperatur bezeichnet insbesondere die Temperatur des Katalysators zu dem Zeitpunkt, bei der der stromaufwärts angeordnete Adsorber beginnt, Kohlenwasserstoffe zu desorbieren. Insbesondere erfolgt die Bestimmung der Umsetzungstemperatur des Katalysators nur dann, wenn aufgrund des Alterungszustandes des Katalysators anzunehmen ist, dass die Grenztemperatur bereits höher als die Umsetzungstemperatur ist. Auch eine zyklische und/oder kontinuierliche Abfrage der Umsetzungstemperatur des Katalysators ist möglich. Zur sicheren Umsetzung der desorbierten Kohlenwasserstoffe entspricht die Umsetzungstemperatur bevorzugt der Temperatur des Katalysators, die dieser zu dem Zeitpunkt erreichen muss, wenn desorbierte Kohlenwasserstoffe den Katalysator (tatsächlich verzögert) erreichen. Daher muss die Umsetzungstemperatur nicht am Katalysator gemessen werden und/oder mit an anderen Stellen der Abgasleitung gemessenen Temperaturen übereinstimmen. Vielmehr kann diese Umsetzungstemperatur ausgehend von der Abgastemperatur und/oder der Temperatur des Adsorbers auch rechnerisch ermittelt werden. Dementsprechend wird die Heizeinrichtung zum Erwärmen des Katalysators insbesondere nur dann betrieben, wenn die Umsetzungstemperatur die vorliegende Grenztemperatur unterschreitet, also z.B. die light-off-Temperatur des Katalysators nicht erreicht ist.

Gemäß einer weiteren vorteilhaften Ausführungsform des Verfahrens wird die Heizeinrichtung in Abhängigkeit des Alterungszustands des zumindest einen Adsorbers angepasst betrieben. Somit wird berücksichtigt, dass insbesondere der Adsorber einerseits ab einer bestimmten, aber altersabhängig variierenden Temperatur mit der Desorption gespeicherter Kohlenwasserstoffe beginnt, andererseits aber auch die Adsorptionsrate in Abhängigkeit des Alterungszustands unterschiedlich sein kann. Auch hier können neben den oben im Zusammenhang mit dem Katalysator genannten Parametern folgende weitere Parameter zur Bestimmung des Alterungszustands des Adsorbers herangezogen werden (ggf. kombiniert und unterschiedlich gewichtet): Beschichtungsart, Beschichtungsdicke, Grundwerkstoff, Wärmekapazität des Adsorbers, Kraftstoffart, Kraftstoffzusätze.

Gemäß einer Weiterbildung des Verfahrens wird eine Anpassung einer Heizleistung der Heizeinrichtung durch den Betrieb einer unterschiedlichen Anzahl von Heizsegmenten oder durch eine verschiedene Anschaltdauer der Heizeinrichtung durchgeführt. Selbstverständlich können diese Maßnahmen auch kombiniert durchgeführt werden. Durch das Betreiben einzelner Heizsegmente und/oder durch das (separate, getrennte) Beheizen von Teilbereichen des Katalysators kann eine schnelle lokale Aufheizung des Katalysators erreicht werden, wobei eine geringe elektrische Leistung eingesetzt wird. Durch das lokale Erreichen der light-off-Temperatur erfolgt dort zuerst die Umsetzung der unverbrannten Kohlenwasserstoffe. Infolge dieser exothermen Reaktion heizen sich aber benachbarte Bereiche des Katalysators so schnell auf, dass auf eine weitere elektrische Zuheizung verzichtet werden kann.

Gemäß einer weiteren vorteilhaften Ausgestaltung wird das erfindungsgemäße Verfahren in einer ersten Betriebsphase eines Kraftfahrzeugs nicht angewendet, sondern erst, wenn die vorgegebene Grenztemperatur einen bestimmten Wert erreicht hat. Dies bedeutet insbesondere, dass bis zum Erreichen einer bestimmten Grenztemperatur bzw. bis zum Erreichen eines gewissen Alterungszustands des Katalysators davon ausgegangen werden kann, dass ein Zuheizen des Katalysators nicht erforderlich ist, weil dieser regelmäßig die light-off-Temperatur erreicht, bevor die Desorption der Kohlenwasserstoffe aus dem stromaufwärts angeordneten Adsorber beginnt. Dementsprechend wird eine unnötige Ermittlung der Umsetzungstemperatur des Katalysators vermieden und somit die Steuerung des Kraftfahrzeugs durch solche unnötigen Abfragen entlastet. Die erste Betriebsphase kann dabei insbesondere mittels wenigstens einem der folgenden Parameter charakterisiert sein:
- Kilometerlaufleistung des Kraftfahrzeuges, insbesondere 20.000 Kilometer;
- Betriebslaufzeit des Kraftfahrzeuges, insbesondere 100 Stunden.

Es wird weiter ein Kraftfahrzeug mit einer Verbrennungskraftmaschine und einer Abgasanlage sowie einer Steuerung vorgeschlagen, wobei die Abgasanlage zumindest einen Adsorber zur Adsorption von Kohlenwasserstoffen und einen stromabwärts des Adsorbers angeordneten Katalysator aufweist. Zwischen Adsorber und Katalysator ist wenigstens eine Heizeinrichtung angeordnet. Die Steuerung ist dabei zur Durchführung des erfindungsgemäßen Verfahrens eingerichtet.

Die Erfindung sowie das technische Umfeld werden nachfolgend anhand der Figuren veranschaulicht. Es ist darauf hinzuweisen, dass die Figuren besonders bevorzugte Ausführungsbeispiele zeigen, auf die die Erfindung jedoch nicht beschränkt ist. Es zeigen schematisch:
- Fig. 1:: ein Kraftfahrzeug mit einer Abgasanlage,
- Fig. 2:: eine Heizeinrichtung,
- Fig. 3:: eine mögliche Veränderung der Grenztemperatur eines Katalysators in Abhängigkeit seines Alters, und
- Fig. 4:: einen Betriebszustand einer Verbrennungskraftmaschine.

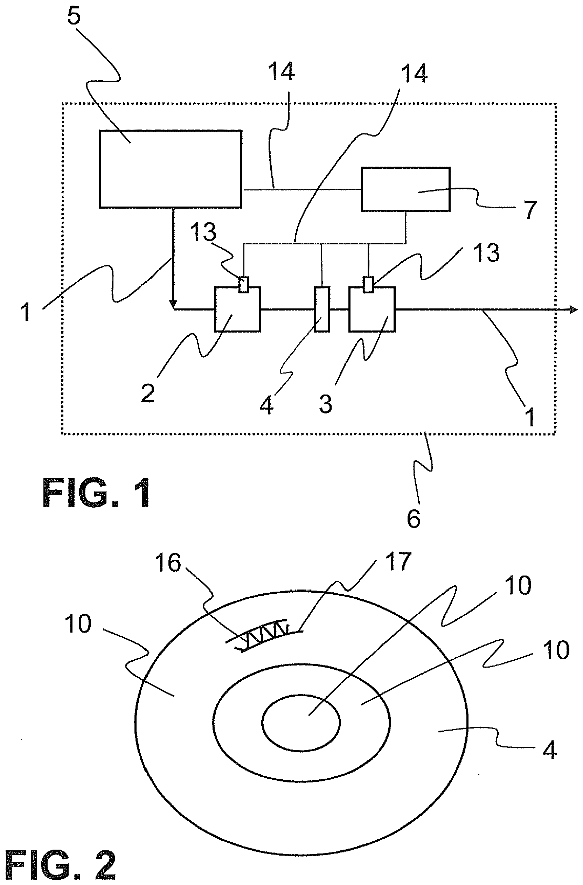

Fig. 1 veranschaulicht schematisch die für das erfindungsgemäße Verfahren bevorzugt vorgesehenen Komponenten. Dabei weist ein Kraftfahrzeug 6 eine Verbrennungskraftmaschine 5 mit einer Abgasanlage 1 auf, wobei in der Abgasanlage 1 ein Adsorber 2, eine Heizeinrichtung 4 und ein Katalysator 3 vorgesehen sind. Dem Adsorber 2 und dem Katalysator 3 sind Sensoren 13 zugeordnet, die z. B. zur Ermittlung der jeweils vorherrschenden Temperatur des Adsorbers 2 bzw. des Katalysators 3 geeignet sind. Die Sensoren 13 sind über Steuerleitungen 14 mit einer Steuerung 7 verbunden, wobei über die Steuerleitung 14 einerseits die ermittelten Sensorwerte übertragbar sind, andererseits aber auch eine elektrische Zuheizung der Heizeinrichtung 4 möglich ist. Weiterhin ist die Steuerung 7 mit der Verbrennungskraftmaschine 5 über Steuerleitungen 14 verbunden, so dass die Steuerung 7 über Betriebszustände der Verbrennungskraftmaschine 5 Informationen erhalten kann. Die Steuerung kann zusätzlich mit wenigstens einem Speicherelement ausgebildet sein oder auf ein solches Zugriff haben, wo beispielsweise Kennfelder, Erfahrungswerte, Parametergrenzwerte und ähnliches abrufbar und/oder anpassbar sind.

Fig. 2 zeigt in einem Querschnitt eine Ausführungsvariante einer Heizeinrichtung 4 nach Art eines Wabenkörpers, wobei hier verschiedene ringförmige Heizsegmente 10 angeordnet sind. Die Heizeinrichtung 4 weist metallische glatte Folien 17 sowie metallische strukturierte Folien 16 auf, die aufeinander gestapelt und/oder gewunden und/oder gewickelt die Heizeinrichtung 4 bilden. Dazu sind die strukturierten Folien 16 bzw. glatten Folien 17 mit einer oder mehreren Elektroden verbunden (nicht dargestellt), so dass die Heizeinrichtung 4 z. B. als Widerstandsheizung betrieben werden kann.

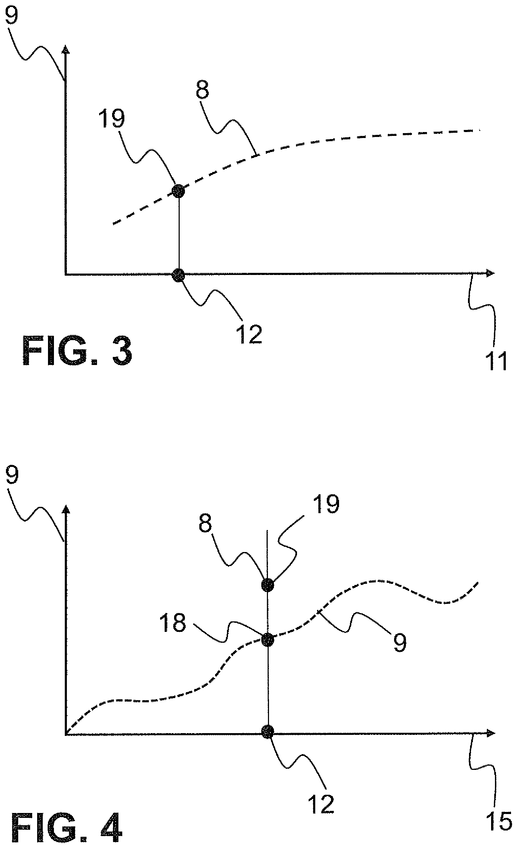

Fig. 3 zeigt einen potentiellen Verlauf einer Grenztemperatur 8 über die Betriebsdauer bzw. die Lebensdauer des Katalysators in der Abgasanlage in Abhängigkeit des Alters 11 des Katalysators. Auf der vertikalen Achse ist die Temperatur 9 aufgetragen, auf der horizontalen Achse das Alter 11 des Katalysators. Fig. 3 zeigt, dass mit zunehmendem Alter 11 des Katalysators auch die Grenztemperatur 8 zu höheren Temperaturwerten verschoben wird. Zu einem bestimmten Zeitpunkt 12 ist dementsprechend ein Alterungszustand des Katalysators erreicht, bei dem eine bestimmte Grenztemperatur 8 mit einem Wert 19 festgestellt werden kann.

Fig. 4 zeigt einen Betriebszustand der Verbrennungskraftmaschine 5, wobei auf der horizontalen Achse die Zeit 15 aufgetragen ist und auf der vertikalen Achse die Temperatur 9. Die Temperatur 9 ist hier insbesondere die im Katalysator durch einen Temperatursensor 13 festgestellte jeweils aktuelle Temperatur. Zu einem bestimmten Zeitpunkt 12 entspricht die ermittelte Temperatur 9 des Katalysators der Umsetzungstemperatur 18, bei der die katalytische Umsetzung von Kohlenwasserstoffen durch den Katalysator erfolgen muss, weil diese desorbiert werden und den Katalysator erreicht haben. Zu diesem Zeitpunkt 12 liegt eine Grenztemperatur 8 mit einem Wert 19 vor, die entsprechend Fig. 4 oberhalb der aktuell ermittelten Temperatur 9 bzw. der Umsetzungstemperatur 18 liegt. Das bedeutet, dass ein Zuheizen durch die Heizeinrichtung erforderlich ist, um den Katalysator auf eine entsprechende Grenztemperatur aufzuheizen, so dass die unverbrannten Kohlenwasserstoffe in dem Katalysator umgesetzt werden können.

Die vorliegende Erfindung mit all ihren Varianten löst die mit Bezug auf den Stand der Technik geschilderten Probleme. Insbesondere wird ein Verfahren zum Betrieb einer Abgasanlage angegeben, das sicherstellt, dass eine möglichst geringe Menge an unverbrannten Kohlenwasserstoffen durch die Abgasleitung in die Umgebung strömt. Zudem kann das vorgeschlagene System für die gesamte Lebenszeit bzw. Betriebszeit in einem Kraftfahrzeug hinsichtlich der Schadstoffwerte besonders gut eingestellt und effizient betrieben werden. Dies bringt insbesondere Kostenvorteile und ermöglicht eine praktisch vollständige Umsetzung der Kohlenwasserstoffe über die gesamte Betriebsdauer der Abgasanlage mit geringem energetischen Aufwand.

### Bezugszeichenliste

- 1: Abgasanlage
- 2: Adsorber
- 3: Katalysator
- 4: Heizeinrichtung
- 5: Verbrennungskraftmaschine
- 6: Kraftfahrzeug
- 7: Steuerung
- 8: Grenztemperatur
- 9: Temperatur
- 10: Heizsegmente
- 11: Alter
- 12: Zeitpunkt
- 13: Sensor
- 14: Steuerleitung
- 15: Zeit
- 16: Strukturierte Folie
- 17: Glatte Folie
- 18: Umsetzungstemperatur
- 19: Wert

## Patentansprüche

1. Verfahren zum Betrieb einer Abgasanlage (1) einer Verbrennungskraftmaschine (5), aufweisend zumindest einen Adsorber (2) zur Adsorption von Kohlenwasserstoffen und einen stromabwärts des Adsorbers (2) angeordneten Katalysator (3) zur Umsetzung von Kohlenwasserstoffen sowie wenigstens eine zwischen dem Adsorber (2) und dem Katalysator (3) angeordnete Heizeinrichtung (4), wobei die Heizeinrichtung (4) in Abhängigkeit des Alterungszustandes des Katalysators (3) angepasst betrieben wird, **dadurch gekennzeichnet, dass** die Heizeinrichtung (4) zumindest in Abhängigkeit einer vorgegebenen Grenztemperatur (8) des Katalysators (3) betrieben wird und wobei die vorgegebene Grenztemperatur (8) in Abhängigkeit von einem aktuellen Alter des Katalysators (3) variiert.

2. Verfahren nach Patentanspruch 1, wobei die zumindest eine Heizvorrichtung (4) an das Adsorptionsverhalten oder das Desorptionsverhalten des zumindest einen Adsorbers (2) angepasst betrieben wird.

3. Verfahren nach Patentanspruch 1, zumindest aufweisend die folgenden Schritte:
- Bestimmen einer Umsetzungstemperatur (18) des Katalysators (3),
- Vergleich Umsetzungstemperatur (18) mit einer vorgegebenen Grenztemperatur (8),
- Betreiben der Heizeinrichtung (4), wenn die Umsetzungstemperatur (18) die vorgegebene Grenztemperatur (8) unterschreitet.

4. Verfahren nach einem der vorherigen Patentansprüche, wobei die Heizeinrichtung (4) in Abhängigkeit des Alterungszustandes des zumindest einen Adsorbers (2) angepasst betrieben wird.

5. Verfahren nach einem der vorherigen Patentansprüche, wobei eine Anpassung einer Heizleistung der Heizeinrichtung (4) durch den Betrieb einer unterschiedlichen Anzahl von Heizsegmenten (10) oder durch eine verschiedene Anschaltdauer der Heizeinrichtung (4) durchgeführt wird.

6. Verfahren zum Betrieb eines Kraftfahrzeuges (6), wobei das Verfahren gemäß den Patentansprüchen 1 bis 5 in einer ersten Betriebsphase eines Kraftfahrzeuges (6) nicht angewandt wird, sondern erst, wenn die vorgegebene Grenztemperatur (8) einen bestimmten Wert (19) erreicht.

7. Kraftfahrzeug (6) mit einer Brennkraftmaschine (5) und einer Abgasanlage (1) sowie einer Steuerung (7), wobei die Abgasanlage zumindest einen Adsorber (2) zur Adsorption von Kohlenwasserstoffen und ein stromabwärts des Adsorbers (2) angeordneten Katalysator (3) zur Umwandlung von Kohlenwasserstoffen aufweist sowie wenigstens eine zwischen Adsorber (2) und Katalysator (3) angeordnete Heizeinrichtung (4), **dadurch gekennzeichnet, dass** die Steuerung (7) zur Durchführung des Verfahrens gemäß einem der Patentansprüche 1 bis 6 eingerichtet ist.

## Claims

1. Method for operating an exhaust gas system (1) of an internal combustion engine (5), having at least one adsorber (2) for adsorbing hydrocarbons and a catalyst (3), arranged downstream of the adsorber (2), for converting hydrocarbons, and at least one heating device (4) arranged between the adsorber (2) and the catalyst (3), wherein the heating device (4) is operated in a manner adapted in accordance with the state of aging of the catalyst (3), **characterized in that** the heating device (4) is operated at least in accordance with a predetermined limiting temperature (8) of the catalyst (3) and wherein the predetermined limiting temperature (8) varies in accordance with a current age of the catalyst (3).

2. Method according to Patent Claim 1, wherein the at least one heating device (4) is operated in a manner adapted to the adsorption behavior or the desorption behavior of the at least one adsorber (2).

3. Method according to Patent Claim 1, at least having the following steps:
- determining a conversion temperature (18) of the catalyst (3),
- comparing the conversion temperature (18) with a predetermined limiting temperature (8),
- operating the heating device (4) if the conversion temperature (18) falls below the predetermined temperature (8).

4. Method according to one of the preceding patent claims, wherein the heating device (4) is operated in a manner adapted in accordance with the state of aging of the at least one adsorber (2).

5. Method according to one of the preceding patent claims, wherein an adaptation of a heat output of the heating device (4) is carried out by operating a different number of heating segments (10) or through a different ON duration of the heating device (4).

6. Method for operating a motor vehicle (6), wherein the method according to Patent Claims 1 to 5 is not employed in a first operating phase of a motor vehicle (6) but only when the predetermined limiting temperature (8) reaches a particular value (19).

7. Motor vehicle (6) having an internal combustion engine (5), an exhaust gas system (1) and a controller (7), wherein the exhaust gas system has at least one adsorber (2) for adsorbing hydrocarbons and a catalyst (3), arranged downstream of the adsorber (2), for converting hydrocarbons, and at least one heating device (4) arranged between the adsorber (2) and the catalyst (3), **characterized in that** the controller (7) is set up for carrying out the method according to one of Patent Claims 1 to 6.

## Revendications

1. Procédé pour faire fonctionner une installation de gaz d'échappement (1) d'un moteur à combustion interne (5), présentant au moins un adsorbeur (2) pour l'adsorption d'hydrocarbures et un catalyseur (3) disposé en aval de l'adsorbeur (2) pour convertir les hydrocarbures ainsi qu'au moins un dispositif de chauffage (4) disposé entre l'adsorbeur (2) et le catalyseur (3), le dispositif de chauffage (4) fonctionnant de manière adaptée à l'état de vieillissement du catalyseur (3),
**caractérisé en ce que** le dispositif de chauffage (4) fonctionne au moins en fonction d'une température limite prédéfinie (8) du catalyseur (3) et la température limite prédéfinie (8) variant en fonction d'un état de vieillissement actuel du catalyseur (3).

2. Procédé selon la revendication 1, dans lequel l'au moins un dispositif de chauffage (4) fonctionne de manière adaptée au comportement d'adsorption ou au comportement de désorption de l'au moins un adsorbeur (2).

3. Procédé selon la revendication 1, présentant au moins les étapes suivantes :
- détermination d'une température de conversion (18) du catalyseur (3),
- comparaison de la température de conversion (18) avec la température limite prédéfinie (8),
- mise en fonctionnement du dispositif de chauffage (4) lorsque la température de conversion (18) est en dessous de la température limite prédéfinie (8).

4. Procédé selon l'une quelconque des revendications précédentes, dans lequel le dispositif de chauffage (4) fonctionne de manière adaptée à l'état de vieillissement de l'au moins un adsorbeur (2).

5. Procédé selon l'une quelconque des revendications précédentes, dans lequel une adaptation d'une puissance de chauffage du dispositif de chauffage (4) est effectuée par le fonctionnement d'une pluralité différente de segments de chauffage (10) ou par une durée de branchement différente du dispositif de chauffage (4).

6. Procédé de fonctionnement d'un véhicule automobile (6), le procédé selon les revendications 1 à 5 n'étant pas utilisé dans une première phase de fonctionnement d'un véhicule automobile (6) mais seulement lorsque la température limite prédéfinie (8) atteint une valeur déterminée (19).

7. Véhicule automobile (6) comprenant un moteur à combustion interne (5) et une installation de gaz d'échappement (1) ainsi qu'une commande (7), l'installation de gaz d'échappement présentant au moins un adsorbeur (2) pour l'adsorption des hydrocarbures et un catalyseur (3) disposé en aval de l'adsorbeur (2) pour convertir des hydrocarbures et au moins un dispositif de chauffage (4) disposé entre l'adsorbeur (2) et le catalyseur (3), **caractérisé en ce que** la commande (7) est prévue pour mettre en oeuvre le procédé selon l'une quelconque des revendications 1 à 6.
